Europäisches Patentamt

European Patent Office

Office européen des brevets

(19)

(11) Publication number: **0 436 396 A2**

# (12) EUROPEAN PATENT APPLICATION

(21) Application number: 90314374.1

(51) Int. Cl.⁵: **B60Q 1/54**

(22) Date of filing: 28.12.90

(30) Priority: 30.12.89 GB 8929362

(43) Date of publication of application:
10.07.91 Bulletin 91/28

(84) Designated Contracting States:
AT BE CH DE DK ES FR GR IT LI LU NL SE

(71) Applicant: Morgan, Kenneth Stanley Arthur
'Wycheholme', Colwall
Nr. Malvern, Worcestershire WR13 6QT (GB)

(72) Inventor: Morgan, Kenneth Stanley Arthur
'Wycheholme', Colwall
Nr. Malvern, Worcestershire WR13 6QT (GB)

(74) Representative: Cowan, David Robert et al
E.N. Lewis & Taylor, 5 The Quadrant
Coventry CV1 2EL (GB)

(54) **Speed indicator.**

(57) A vehicle speed indicator is arranged to display the speed of an associated vehicle to a vehicle travelling behind. It includes a speed display unit (10) and a device for detecting the vehicle's speed. A detector transmits a signal to the display unit.

F I G   1

EP 0 436 396 A2

## SPEED INDICATOR

This invention relates to speed indicators and in particular to indicators for vehicles.

Vehicles are subject of various speed restrictions according to the kind of road on which the vehicle is travelling and on the location of the road. In addition different vehicles have different maximum speed restrictions imposed on them.

Although speed restrictions are imposed by law many vehicle drivers do not always abide by the restrictions and travel at speeds above those allowed.

An object of the invention is to provide means whereby there is an external indication of the speeds of vehicles to assist in the maintenance of vehicle speeds within the allowed limits.

According to the invention a vehicle speed indicator comprises a speed display unit mounted in a vehicle to be visible to following vehicles, and vehicle speed detection means for detecting the speed of the associated vehicle and for generating a signal according to such speed, the signal being passed to the display unit which is arranged to display the vehicle speed rearwardly of the vehicle.

Preferably the speed display unit is mounted internally on the rear windscreen of the vehicle and includes means for changing the speed which is displayed in the form of numbers. Conveniently the unit includes a LED display which is controlled according to the signals from the speed detection means. The size of the LED display is selected to be visible from a distance by the drivers of following vehicles, for example the numbers may be of the size of the letters and numbers of a vehicle number plate and visible at 25 metres or more.

The speed detection means may detect the vehicle speed in any convenient manner. In one arrangement a speed indicating signal is generated by a sensor associated with the vehicle's conventional speed indicator. The sensor may be arranged to sense the rotation of the speedometer cable or an associated rotating element, or the sensor may include a tachogenerator directly driven from the speedometer cable.

Further features of the invention will appear from the following description of an embodiment of the invention given by way of example only and with reference to the drawings, in which :

Fig. 1 is a perspective view of a speed display unit,

Fig. 2 is a section through one form of speed detector, and

Fig. 3 is a section through an alternative form of speed detector.

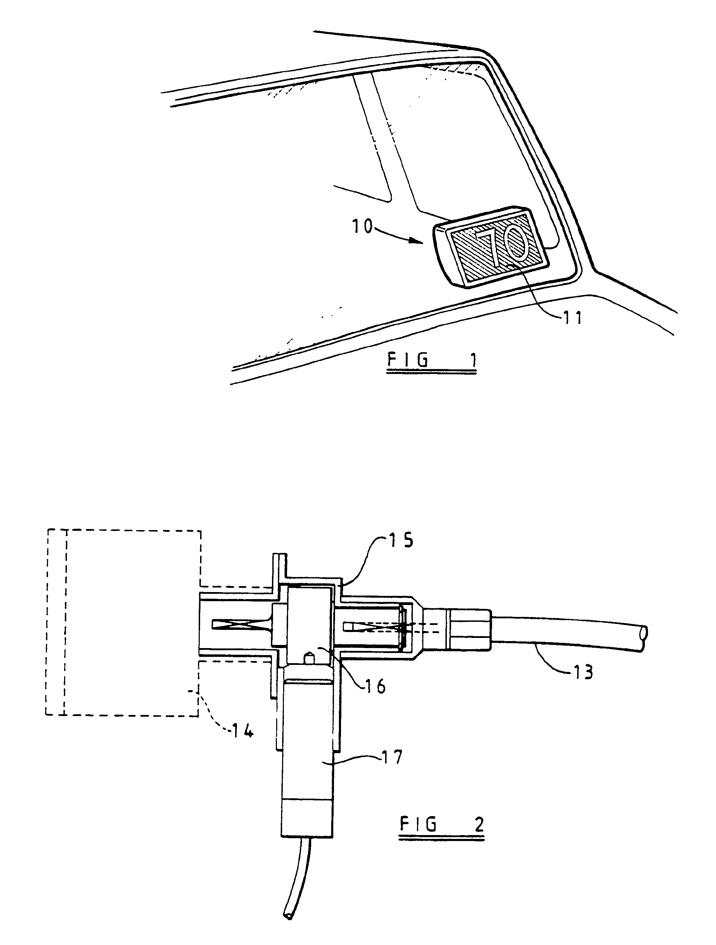

Referring to Fig. 1 a speed display device 10 is shown mounted on the rear windscreen of a passenger car vehicle so that the device is readily visible to following vehicles.

The device includes a LED display 11 the numbers on which can be constantly varied according to the speed at which the vehicle is travelling. The display may be of any convenient kind which is capable of displaying numbers of a size visible to the following vehicles when travelling at a safe distance behind the displaying vehicle.

The device may be positioned at any convenient location on the windscreen such that rearward vision of the vehicle driver is not adversely affected.

Other means for displaying the speed may be used and the range of numbers which may be displayed is conveniently between the lower speed limits and a maximum speed attainable by the vehicle. For example in Great Britain the speed range may be between 10 and 120 mph. In one arrangement the numbers change colour when excessive speeds are reached. Thus the colour may be green up to 70 mph and red when above 70 mph.

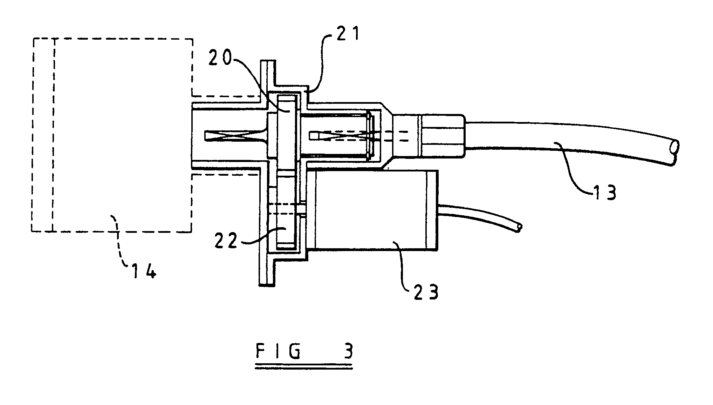

The device 10 is connected to a speed detector such as shown in Fig. 2 or Fig. 3, the detector in each case generating a signal corresponding to the speed of the vehicle and transmitting the signal to the device 10.

Referring to Fig. 2 the speed detector is associated with the cable 13 which conventionally transmits the vehicle speed to a dashboard mounted speedometer 14. In this case a housing 15 is provided interposed between the end of the cable and the speedometer and in the housing is located a rotary member 16 drivingly connected to the cable 13 at one end and to the speedometer 14 at the other end.

A sensor 17 which in known manner detects the rotation of the rotary member 16 is located adjacent the member 16 and generates a signal dependent on the speed of rotation for transmission to the speed display device 10.

Referring now to Fig. 3 there is shown an alternative arrangement including the cable 13 and speedometer 14 of Fig. 2 but in this case a gearwheel 20 is interposed between the cable 13 and the speedometer in a housing 21. The gearwheel 20 drives a further gearwheel 22 which in turn drives a tachogenerator 23.

The tachogenerator 23 may take any convenient form and produces an electrical signal corresponding to the speed of the vehicle. The signal produced is transmitted to the device 10 for display.

The speed indicator can be fitted to any vehicle either when the vehicle is manufactured or as a later fitting. It warns following vehicles of the speed at which they are travelling and also of the rate of increase of speed of the vehicle carrying the display which is a useful aid when an overtaking manoeuvre is taking place. The device would normally be fitted to deter others from driving too fast.

## Claims

1. Vehicle speed indicator characterised by a speed display unit (10) to be mounted in the vehicle to be visible to following vehicles, and vehicle speed detection means (15, 16, 17) for detecting the speed of the associated vehicle and for generating a signal according to this speed, the signal being passed to the display unit (10) which is arranged to display the vehicle speed rearwardly of the vehicle.

2. Vehicle speed indicator according to Claim 1 characterised in that the speed display unit 10 is arranged to be mounted internally on the rear windscreen of the associated vehicle.

3. Vehicle speed indicator according to Claim 1 or 2 characterised by means for displaying the speed of the vehicle according to the signal received from the vehicle speed detection means (15, 16, 17).

4. A vehicle speed indicator according to Claim 1, 2 or 3 characterised in that the speed display unit (10) includes a LED display 11 controlled according to the signals received from the speed detection means (15, 16, 17).

5. A vehicle speed indicator according to any one of the preceding claims characterised in that the speed of the associated vehicle is displayed in numerals which are of a size selected to be readable at a distance of 25 metres or more.

6. A vehicle speed indicator according to any one of the preceding claims characterised in that the speed detection means includes a sensor (17) associated with the vehicle's conventional speed indicator (13, 14), which sensor generates a signal according to the vehicle speed.

7. A vehicle speed indicator according to Claim 6 characterised in that the sensor (17) is arranged to sense the speed of rotation of the speedometer cable (13) or an associated rotating element.

8. A vehicle speed indicator according to Claim 6 characterised in that the sensor includes a tachogenerator (23) driven from the speedometer cable (13).

F I G   1

F I G   2

20  21

22

14

13

23

F I G   3